**Europäisches Patentamt**

**European Patent Office**

**Office européen des brevets**

(19)

(11) Veröffentlichungsnummer: **0 405 060**

**A2**

(12) **EUROPÄISCHE PATENTANMELDUNG**

(21) Anmeldenummer: 90105963.4

(22) Anmeldetag: 29.03.90

(51) Int. Cl.5: **B29C 67/22**, B29C 47/10, B29C 47/92, //B29K105:04

(30) Priorität: 30.06.89 DE 3921523

(43) Veröffentlichungstag der Anmeldung: 02.01.91 Patentblatt 91/01

(84) Benannte Vertragsstaaten: DE FR GB IT SE

(71) Anmelder: **HERMANN BERSTORFF Maschinenbau GmbH**
**An der Breiten Wiese 3/5**
**D-3000 Hannover 61(DE)**

(72) Erfinder: **Meyke, Joachim, Dipl.-Ing.**
**Zur Hindenburgschleuse 6**
**D-3000 Hannover 71(DE)**
Erfinder: **Martin, Gerhard, Dr.-Dipl.-Ing.**
**Celler Strassse 74**
**D-3000 Hannover 1(DE)**

(54) **Verfahren zum Herstellen eines Schaumstoffes aus thermoplastischen Kunststoff.**

(57) Es wird ein Verfahren zum Herstellen eines Schaumstoffes aus thermoplastischem Kunststoff, einer Porenreglersubstanz und einem Treibmittel in einem Extruder aufgezeigt, bei dem in dem plastifizierten Kunststoff ein gasförmiges und ein flüssiges Treibmittel durch stromabwärts hintereinander angeordnete Einspritzöffnungen eingedüst werden. Als erstes Treibmittel wird ein gasförmiger Stickstoff ($N_2$) mit einem Anteil von 0,2 bis 0,5 Gew.-% und als zweites Treibmittel teilhalogenierte Verbindungen, wie R22, R123, R134a, R141b und R142b, mit einem Anteil von 0,5 bis 2 Gew.-% eingedüst. Gleichzeitig muß im Extrusionskopf ein Material-Treibmittelgemischdruck von mindestens 55 bar und eine Material-Treibmittelgemisch-Temperatur von mindestens 130° C eingestellt werden. In überraschender und nicht zu erwartender Weise wurde ein Schaumstoff mit einem sehr geringen Raumgewicht erhalten.

**Fig.2**

EP 0 405 060 A2

## VERFAHREN ZUM HERSTELLEN EINES SCHAUMSTOFFES AUS THERMOPLASTISCHEM KUNSTSTOFF

Die Erfindung betrifft ein Verfahren gemäß dem Oberbegriff des Patentanspruchs.

Die Markteinführung der extrudierten Schaumprodukte ist Mitte der 60er-Jahre durch den Gebrauch der Fluorchlorkohlenwasserstoffe (FCKW) als Ersatz für die brennbaren Treibmittel Pentan aus der Familie der Kohlenwasserstoffe entscheidend begünstigt worden. Mit Beginn des Einsatzes der FCKW-Typen R11, R12, R113 und R114 bei der Schaumextrusion, ließen sich Halbzeuge und Produkte herstellen, die den Marktansprüchen sowohl in bezug auf Qualität als auch Handhabung entsprachen.

Aufgrund wissenschaftlicher Erkenntnis wurde festgestellt, daß die FCKW-Gase, die auch in der Aerosol- und Kältetechnik als Sprüh- und Kältemittel und in der Elektronikindustrie als Reinigungsmittel sowie bei der Polyurethanverschäumung als Treibmittel eingesetzt werden, den Abbau der Ozonschicht in der oberen Erdatmosphäre wesentlich beschleunigen.

Es wurde in jüngster Zeit auf den Gebrauch des sehr leicht entzündlichen, ursprünglich eingesetzten Pentans zurückgegangen, das nicht Ozongürtel schädigend ist.

Die dafür einzusetzenden Anlagen unterscheiden sich nicht wesentlich von den herkömmlichen Systemen. Es sind jedoch Dosiersysteme für die Treibmittelzugabe einzusetzen, die sicherstellen, daß das Treibmittel aufgrund von Verschleiß im Druckaufbausystem der Pumpe nicht austreten kann, wodurch die Feuergefahr erheblich erhöht würde. Außerdem ist es empfehlenswert, die Treibmitteldosiersysteme getrennt von der Anlage aufzustellen. Weitere zusätzliche Sicherheitsmaßnahmen, die unbedingt notwendig sind, sind die intensive Belüftung in Form von Lufterneuerung am Aufstellungsplatz der Schaumextrusionsanlage, im Folien-Zwischenlager, im Tiefziehbereich und im Bereich der Reextrusion der Schaumabfälle sowie das zusätzliche Anbringen von Einrichtungen, die die statische Aufladung der Schaumhalbzeuge und der Produkte ableiten.

Für das Extrusionsschäumen von Polystyrol, sind daher bestimmte Forderungen an die Treibmittel zu stellen.

Das Treibmittel muß in der Polystyrolschmelze löslich sein, aber seine Viskosität und seinen Glaspunkt nicht zu stark verändern. Das Treibmittel muß während der Expansion eine hohe Verdampfungsgeschwindigkeit aufweisen, damit die Restgaskonzentration gering bleibt. Es darf keine Permeation auftreten, da sie ein Zusammenbrechen der Zellen vor dem Erstarren zur Folge hätte.

Physikalische Treibmittel, die diese Eigenschaften besitzen und in der Praxis angewendet werden, sind Pentan, Trichlorfluormethan, Dichlordifluormethan und in Ausnahmefällen Stickstoff.

Stickstoff ist erfolgreich als Treibmittel einsetzbar, wenn eine genügend hohe Lösungskonzentration erreicht werden kann, was bisher nur mit einem sehr hohen und nicht vertretbaren maschinellen Dosieraufwand durchführbar ist. Die geringe Affinität des Stickstoffes zur Polystyrolschmelze erfordert hierfür einen sehr hohen Lösungsdruck, der im Vergleich zu Dichlordifluormethan um ein Mehrfaches höher liegt.

Es ist die Aufgabe der Erfindung, Treibmittel vorzuschlagen, die gute Aufschäumeigenschaften haben, sich ohne Brandgefahr verarbeiten lassen und bei deren Einsatz die Ozongürtelschädigung vernachlässigbar gering ist.

Das Treibmittel selbst soll zu sehr geringen Schaumdichten führen, um im Verpackungsbereich wenig Gewicht darzustellen und um möglichst wenig des relativ teuren Kunststoffes einsetzen zu müssen.

Die Aufgabe wird durch die im kennzeichnenden Teil des Patentanspruchs stehenden Merkmale gelöst.

In überraschender und nicht zu erwartender Weise wurde gefunden, daß die Eindüsung von zwei verschiedenen Treibmitteln, nämlich 0,2 bis 0,5 Gew.-% $N_2$ und 0,5 bis 2 Gew.-% teilhalogenierte Verbindungen (siehe Anspruch 1), bezogen auf ein mit Talkum vermischtes Polystyrol, dann zu äußerst geringen Raumgewichten des Schaumstoffes führt, wenn in eine Kunststoffschmelze zunächst ein gasförmiger Stickstoff eingearbeitet und danach flüssige teilhalogenierte Verbindungen eingedüst werden, wobei die günstigen Raumgewichte auch nur dann erhalten werden, wenn zusätzlich im Bereich des Extrusionskopfes, d.h. bis kurz vor den Austritt, ein Material Treibmittelgemischdruck von mindestens 55 bar aufrechterhalten werden. Zusätzlich mußte eine Temperatur im Kopfbereich von mindestens 130° C eingehalten werden.

Die Extruderanlage für die Durchführung des Verfahrens weist in vorteilhafter Weise stromabwärts zunächst eine Einspritzeinrichtung für ein gasförmiges Treibmittel und in einem Abstand von mindestens 2 D (D = Schneckendurchmesser) eine Einspritzeinrichtung für ein flüssiges Treibmittel auf. Dieser Abstand ist sehr vorteilhaft, um eine gute und homogene Einmischung des gasförmigen Treibmittels zu erreichen. In die das gasförmige Treibmittel bereits enthaltende Kunststoffschmelze läßt sich in nicht zu erwartender Weise dann eine weitere Treibmittelanreicherung erreichen, wenn ein flüssiges Treibmittel eingesetzt wird, ohne daß es beim Einmischen des zweiten flüssigen Treibmittels zu nachteiligen Auswirkungen (Entmischung u.s.w.) kommt.

In der Zeichnung wird ein Extruder gezeigt, der für die Versuchsdurchführung eingesetzt wurde.

Fig. 1 zeigt eine perspektivische Darstellung des Extruders

Fig. 2 einen schematisierten Längsschnitt des Extruders

In dem Extruder 1 ist eine Schnecke 2 angeordnet, die durch ein Getriebe 3 in Drehbewegung gesetzt wird und das durch den Trichter 4 eingefüllte Material in Richtung des Kopfes 5 fördert.

Durch die Treibmitteleinspritzdüse 6 wird gasförmiger N₂ und durch die Einspritzdüse 7 flüssiges R22 in den Extrusionsraum 8 eingedüst mit einem den Druck in Raum 8 übersteigenden Druck.

Sowohl für den Stickstoff (N₂) als auch für das Chlordifluormethan (R22), werden bekannte Dosiereinrichtungen 9 eingesetzt.

In dem Kopf sind Temperaturkanäle 10 angeordnet, die an ein nicht gezeigtes Temperiergerät angeschlossen sind.

Mittels Drucksensoren 11 wird der Druck im Raum 12 des Kopfes 5 gemessen. Auf den Druck im Raum 12 kann durch eine entsprechende Gestaltung der Fließkanäle und durch eine axiale Verstellung des Dornes 13, entsprechend des Pfeiles, eingewirkt werden.

Der Druck im Extrusionsraum 8 wird durch Drucksensoren 14 erfaßt und weitergegeben.

Bei der Durchführung der in den Beispielen 3 - 12 beschriebenen Versuche herrschte im Extrusionsraum 8 im Bereich der Einspritzdüsen 6 und 7 ein Druck von 150 bis 350 bar. Am Ende der Schnecke 2 wurde der Druck auf etwa 100 - 200 bar eingestellt. Im Kopf wurden im Mittel 80 - 180 bar Material-Treibmittelgemischdruck eingestellt. Wenn dieser Druckbereich im Kopf verlassen wird, sind die Schaumergebnisse, d.h. der Aufschäumungsgrad der hergestellten Folie, unzureichend.

Die Temperatur des Gemisches betrug im Extrusionsraum 8 im Bereich der Einspritzdüsen max. 240° C. Danach wurde die Temperatur zur Schneckenspitze hin auf 130° C eingestellt. Wenn diese Temperatur verringert wurde, war die erzielte Qualität des Schaumes nicht mehr vertretbar.

Nachfolgend werden Vergleichsbeispiele aufgeführt.

Beispiel 1 (Stand der Technik)

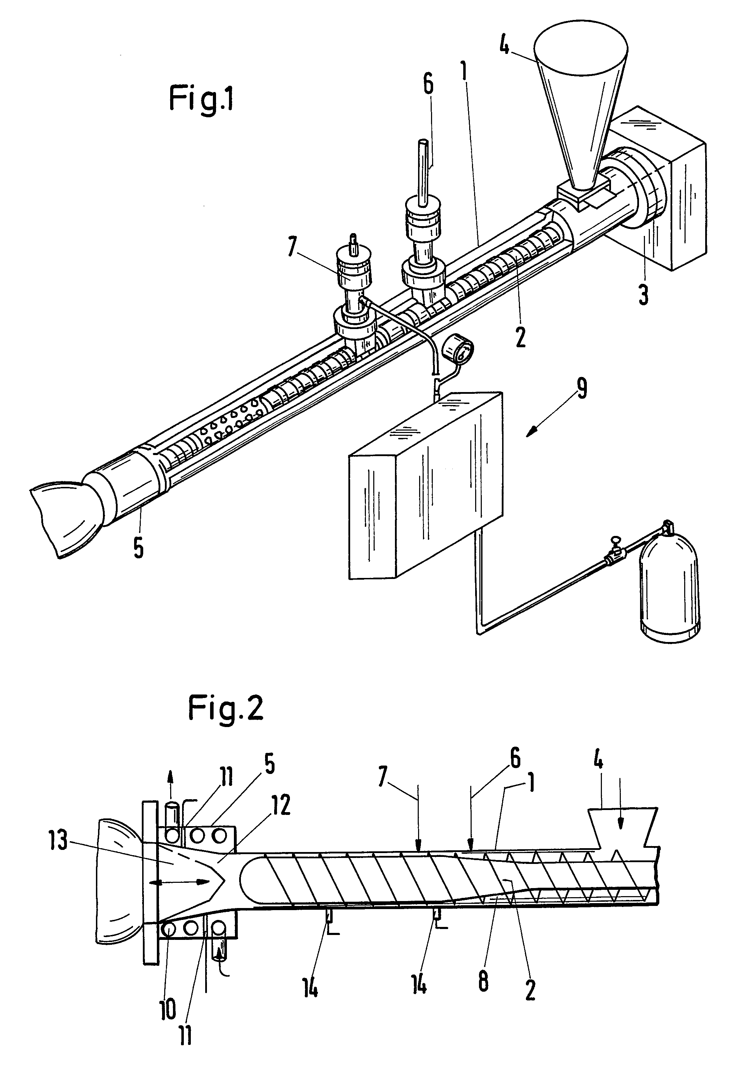

Es wurden 99,5 kg Polystyrol vermischt mit 0,5 kg Talkum als Porenreglersubstanz in einen Extruder, wie gezeigt in Fig. 1, eindosiert und aufgeschmolzen.

In die Polystyrolschmelze wurden 0,3 Gew.-%

Stickstoff (N₂) in Gasform (Gasvolumen 0,327 m³) durch die Einspritzdüse 6 eindosiert und homogen damit vermischt.

Dann wurde die Mischung zu einem Schlauch extrudiert.

Das Raumgewicht betrug bei einer Dicke der Schlauchwandung von 1 mm 350 kg/m³. Das erzielte Raumgewicht ist zu groß, so daß der Schaumstoff nur bedingt einsetzbar ist.

Beispiel 2 (Stand der Technik)

Bei einem Vergleichsversuch mit 0,5 Gew.-% Stickstoff (N₂) (Gasvolumen 0,545 m³) wurde, bei ansonsten gleichen Verfahrensbedingungen ein Raumgewicht von 200 kg/m³ bei einer Dicke der Schlauchwandung von 2 mm, erzielt.

Auch dieser Wert ist nur begrenzt vertretbar.

Wenn der Stickstoffanteil noch weiter erhöht wurde, verschlechterte sich das Raumgewicht rapide, weil vermutlich eine Treibmittelsättigung vorliegt (d.h. der Kunststoff nahm das Treibmittel nicht mehr auf).

Beispiel 3 (gemäß der Erfindung)

Es wurden wiederum 99,5 kg Polystyrol in Granulatform in einen Extruder zusammen mit 0,5 kg Talkum als Porenreglersubstanz eingegeben und aufgeschmolzen.

In die Schmelze wurden
0,5 Gew.-% gasförmiger Stickstoff (N2), welches ein Gasvolumen von ca. 0,545 m³ bei 373 K ergibt und welches 61 % des Gesamtgasvolumens der Gesamttreib mittelmenge (1,5 Gew.-%) ausmacht, eindosiert.
Anschließend wurde 1 Gew.-% flüssiges Chlordifluormethan (R22), welches ein Gasvolumen von 0,355 m³ bei 373 K ergibt und 39 % des Gesamtgasvolumens der Gesamttreibmittelmenge ausmacht,
eindosiert und im folgenden Teil des Extruders homogen damit vermischt.

Im Extruderkopf wurde durch eine axiale Verstellung des Dornes 13 und durch die Gestaltung der Fließkanäle ein MaterialTreibmitteldruck von 60 bar eingestellt.

Gleichzeitig wurde duch die Temperierung des Kopfes mittels eines Öl-Temperiergerätes eine Temperatur des Material-Treibmittelgemisches von 163° C gehalten.

Anschließend wurde das Gemisch zu einem Schlauch extrudiert, der aufgeschnitten und flachgelegt wurde.

Die Schlauchdicke betrug 1,5 mm. Es wurde ein Raumgewicht von 161 kg/m³ erzielt, was als vertretbarer Wert für viele Anwendungsfälle anzusehen ist.

Durch weitere Versuche wurde festgestellt, daß beim Einsatz von Polyäthylen die Kopftemperatur bis knapp unter 130° C gesenkt werden konnte, ohne die Ergebnisse merklich zu beeinflussen.

**Beispiel 4 (gemäß der Erfindung)**

Der Versuch, wie in Beispiel 3 beschrieben, wurde wiederholt, jedoch mit dem Unterschied, daß 1,5 Gew.-% flüssiges Chlordifluormethan (R22) (Gasvolumen 0,532 $m^3$ bei 373 K) und einem Anteil von 49 % vom Gesamtgasvolumen der Gesamttreibmittelmenge von 2 Gew.-% eingesetzt wurde.

Die Dicke der Schaumstoffwandung war 1,7 mm jedoch betrug das Raumgewicht 132 $kg/m^3$, was schon als ein guter Wert angesehen werden muß.

**Beispiel 5 (gemäß der Erfindung) beide Treibmittel max. Zugabe**

Es wurde ein weiterer Versuch, wie beschrieben im Beispiel 3, gefahren, jedoch wurde der Anteil des R22 erhöht. Es wurden 2 Gew.-% flüssiges Chlordifluormethan (R22) (Gasvolumen 0,710 $m^3$ bei 373 K) Gasvolumenanteil 57 % von der Gesamttreibmittelmenge von 2,5 Gew.-% eindosiert.

Die Wandungsdicke der Schaumbahn betrug 2 mm .

Das erzielte Raumgewicht betrug 90 $kg/m^3$, was als ein absolut guter Wert anzusehen ist.

**Beispiel 6 (N$_2$-Zugabe maximal, R22 minimal)**

Der Versuch, wie in Beispiel 5 beschrieben, wurde wiederholt, jedoch mit dem Unterschied, daß 0,5 Gew.-% CHC1F$_2$ (R22), welches ein Gasvolumen von ca. 0,177 $m^3$ bei 373 K ergibt und welches 25% des Gesamtgasvolumens der Gesamttreibmittelmenge von 1,0 Gew.-% ausmacht, eindosiert wurde.

Die Schaumfoliendicke betrug 1,5 mm und das Raumgewicht 145 $kg/m^3$.

**Beispiel 7 (N$_2$-Zugabe minimal, R22 maximal**

Der Versuch, wie in Beispiel 5 beschrieben, wurde wiederholt, jedoch mit dem Unterschied, daß

0,2 Gew.-% Stickstoff (N$_2$), Gasvolumen 0,218 $m^3$ bei 373 K, was einem Anteil von 24 % vom Gesamtgasvolumen der Gesamttreibmittelmenge von 2,2 Gew.-% entspricht, eindosiert wurde.

Als Werte für die Schaumstoffdicke ergaben sich 1,4 mm und für das Raumgewicht 180 $kg/m^3$.

**Beispiel 8 (N$_2$-Zugabe minimal, R22 minimal)**

Es wurde ein weiterer Versuch, wie in Beispiel 7 beschrieben, gefahren, jedoch wurde der Anteil R22 heruntergesetzt. Es wurden 0,5 Gew.-% CHClF$_2$ (R22), Gasvolumen 0,177 $m^3$ bei 373 K, was einem Anteil von 45 % vom Gesamtgasvolumen der Gesamttreibmittelmenge von 0,7 Gew.-% entspricht, eindosiert.

Es ergab sich ein sehr schwerer Schaum, der hart und spröde war und eine Schaumstoffdicke von 0,7 mm und ein Raumgewicht von ca. 500 $kg/m^3$ aufwies.

**Beispiel 9 (gemäß der Erfindung)**

Der Versuch, wie in Beispiel 3 beschrieben, wurde wiederholt, jedoch mit dem Unterschied, daß 1,0 kg flüssiges CHCl$_2$-CF$_3$ (R123) (1 Gew.-%), welches ein Gasvolumen von ca. 0,200 $m^3$ bei 373 K ergibt und welches 27 % des Gesamtgasvolumens der Gesamttreibmittelmenge von 1,5 Gew.-% ausmacht, eindosiert wurde.

Die Dicke der Schaumstoffwandung betrug 1,3 mm und das Raumgewicht 160 $kg/m^3$. Der Schaum war insgesamt etwas härter und spröder als in Beispiel 3.

**Beispiel 10 (gemäß der Erfindung**

Der Versuch, wie in Beispiel 3 beschrieben, wurde anstatt mit R22 mit 1,0 kg flüssiges CH$_2$F-CF$_3$ (R134a) (1 Gew.-%), welches ein Gasvolumen von ca. 0,301 $m^3$ bei 373 K ergibt und welches 35 % des Gesamtgasvolumens der Gesamttreibmittelmenge von 1,5 Gew.-% ausmacht, wiederholt.

Bei einer Schaumstoffdicke von 1,5 mm wurde ein Raumgewicht von 148 $kg/m^3$ erzielt, was als guter Wert anzusehen ist.

**Beispiel 11 (gemäß der Erfindung)**

Der Versuch, wie in Beispiel 3 beschrieben, wurde wiederholt mit dem Unterschied, daß für das R22

1,0 kg flüssiges $CH_3$-$CCl_2F$ (R141b) (1 Gew.-%), welches ein Gasvolumen von ca. 0,263 m³ bei 373 K ergibt und welches 33 % des Gesamtgasvolumens der Gesamttreibmittelmenge (1,5 Gew.-%) ausmacht,
eindosiert wurde.

Bei einer Schaumstoffdicke von 1,4 wurde ein Raumgewicht von 155 kg/m³ erhalten. Die Schaumqualität ist ähnlich der aus Beispiel 3 mit R 22, jedoch mit verbessertem Raumgewicht.

Beispiel 12 (gemäß der Erfindung)

- Es wurde ein weiterer Versuch, wie in Beispiel 3 beschrieben, durchgeführt, jedoch mit dem Unterschied, daß anstelle des R22

1,0 kg flüssiges $CH_3CClF_2$ (R142b) (1 Gew.-%), welches ein Gasvolumen von ca. 0,304 m³ bei 373 K ergibt und welches 36 % des Gesamtgasvolumens der gesamttreibmittelmenge (1,5 Gew.-%) ausmacht,
eindosiert wurde.

Es wurde eine Schaumstoffwandung von 1,6 mm erhalten mit einem Raumgewicht von 155 kg/m³, was als guter Wert zu betrachten ist.

**Bezugszeichenliste:**

1 = Extruder
2 = Schnecke
3 = Getriebe
4 = Trichter
5 = Extruderkopf
6 = Treibmitteleinspritzdüse
7 = Einspritzdüse
8 = Extrusionsraum
9 = Druckaufbaueinrichtung
10 = Temperaturkanal
11 = Drucksensor
12 = Raum
13 = Dorn
14 = Drucksensor

**Ansprüche**

1. Verfahren zum Herstellen eines Schaumstoffes aus thermoplastischem Kunststoff, einer Porenreglersubstanz und einem Treibmittel, wobei in dem Extruder die Bestandteile plastifiziert, vermischt und homogenisiert werden und wobei in dem plastifizierten Kunststoff zwei verschiedene Treibmittel durch stromabwärts hintereinander angeordnete Einspritzöffnungen eingedüst werden,
**dadurch gekennzeichnet,**
daß als erstes Treibmittel gasförmiger Stickstoff ($N_2$) in einer Menge von 0,2 bis 0,5 Gew.-%, bezogen auf das mit Talkum vermischte Polystyrol, eingedüst wird,
daß als zweites Treibmittel flüssige, teilhalogenierte Verbindungen, wie z.B. $CHClF_2$ (R22), $CHCl_2$-$CF_3$ (R123), $CH_2F$-$CF_3$ (R134a), $CH_3$-$CCl_2F$ (R141b) oder $CH_3$-$CClF_2$ (R142b) in einer Menge von 0,5 bis 2 Gew.-%, bezogen auf mit Talkum vermischte Polystyrol, eingedüst wird,
daß im Extrusionskopf ein Material-Treibmittelgemischdruck von mindestens 55 bar und eine Material-Treibmittelgemisch-Temperatur von mindestens 130° C eingestellt wird.

2. Extruderanlage zur Durchführung des Verfahrens nach Anspruch 1, bestehend aus einem hohlzylindrischen, zwei stromabwärts hintereinander angeordnete Einspritzbereiche aufweisenden Gehäuse, in dem eine rotierende, antreibbare Homogenisierschnecke angeordnet ist,
**dadurch gekennzeichnet,**
daß der erste Einspritzbereich, mit einer Einspritzeinrichtung (6) für ein gasförmiges Treibmittel und der zweite Einspritzbereich mit einer Einspritzeinrichtung (7) für ein flüssiges Treibmittel ausgebildet ist, und
daß zwischen beiden Bereichen ein Abstand von mindestens 2 D (D = Schneckendurchmesser) eingehalten wird.

3. Extruderanlage nach Anspruch 2,
**dadurch gekennzeichnet,**
daß für eine Druckeinstellung im Kopf (5) der Dorn (13) axial verstellbar ausgebildet ist.

4. Extruderanlage nach Anspruch 2,
**dadurch gekennzeichnet,**
daß der Extrusionskopf Drucksensoren (11) aufweist.

5. Extruderanlage nach Anspruch 2,
**dadurch gekennzeichnet,**
daß der Kopf (5) und der Austrittsdüsenspalt mittels Temperierkanäle (10) temperierbar ausgebildet ist.

Fig.1

Fig.2